# EUROPEAN PATENT SPECIFICATION

(11) **EP 4 433 737 B1**
(45) Date of publication and mention of the grant of the patent: **09.09.2026**
(21) Application number: 22826455.2
(22) Date of filing: 15.11.2022
(51) Int. Cl.: F16L 33/22

(54) **SEALING CONNECTOR DEVICE FOR HOSES**
DICHTENDE VERBINDUNGSVORRICHTUNG FÜR SCHLÄUCHE
DISPOSITIF DE CONNEXION ÉTANCHE POUR TUYAUX

(30) Priority: 16.11.2021 IT 202100029012
(43) Date of publication of application: 25.09.2024
(73) Proprietor: TECHCLAMP AG, 8957 Spreitenbach (CH)
(72) Inventor: BELLUZZI, Riccardo, 40068 San Lazzaro di Savena (BO) (IT)
(74) Representative: Manzella & Associati
(86) International application number: PCT/IT2022/050295
(87) International publication number: WO 2023/089645

(56) References cited:
- EP-A2- 1 840 441
- EP-B1- 3 173 675
- WO-A1-2021/037394
- GB-A- 1 494 323

## Description

### Technical field

The present invention relates to a sealing connector device for flexible tubes.

### Prior art

Connectors for reusable flexible tubes are known, in particular used in the medical sector, for connecting medical apparatuses with flexible tubes for feeding or distributing a liquid, preferably formed of material such as silicone.

The connectors used in this sector, in particular, require total asepticism, as well as the possibility of being easily disassembled and reassembled, and then reused, for example to allow the replacement of the flexible tubes.

EP3173675 illustrates an example of a connector device, comprising a connecting element, a clamping sleeve and a cup nut, adapted to at least partially encircle the sleeve in the mounted condition. In particular, the clamping sleeve comprises a support portion and a clamping portion, interconnected by an annular-shaped joining portion. The holding portion and the clamping portion have a plurality of clamping blades and clamping tongues respectively, which develop from the junction portion. The first ones are intended to engage with a radial projection on the connecting member, to axially retain the holding portion. The tube to be connected is inserted on the connection element, between the latter and the aforementioned connection portion, so as to be compressed tightly by the screwing of the cup nut.

EP1841998 illustrates a further example of a liquid-proof connection device for connecting a flexible tube. The illustrated device comprises a tubular element for applying the tube, a clamping sleeve provided with at least two segments distributed along the circumference of the sleeve, which protrude from the tubular element and are provided on the exterior with a sloped stop surface, and a union nut cooperating with said sloped stop surface of the segments of the clamping sleeve, through an internal sloped stop surface, so as to press the same elements against the flexible tube.

GB 1494323, EP1840441, WO 2021/037394 illustrate other examples of known connector devices.

Known solutions have certain disadvantages, as they do not allow easy disassembly of the connector device. In particular, the pressure of the sleeve on the flexible tube, determined by the manual screwing of the outer ring nut, is concentrated on an annular area of the tube, on which the ends of the tongues or of the yielding segments of the sleeve are engaged.

The compression concentration determines in particular, especially for tubes of relatively large diameter, a localized adhesion of the sleeve to the tube, which makes it difficult to disassemble the component.

Furthermore, it should be noted that known solutions are usually used for a certain range of diameters of flexible tube. The connection is made for each diameter, adjusting the tightening stroke of the external ring nut, so as to ensure adequate compression of the sleeve on the flexible tube. Therefore, to ensure the necessary tightening, the ring nut is screwed for a maximum stroke in the case of connection to flexible tubes at the lower limit of the diameter range, while it is screwed for a minimum stroke in the case of connection to flexible tubes at uppermost limit of the diameter range. **In** the latter case, however, the ring nut may leave a portion of the thread in the clamping component uncovered. **In** any case, given that the adjustment of the screwing stroke of the ring nut is left to the sensitivity of the operator, the assembly of these devices cannot always be performed in an optimal way, as well as rigorously repeatable.

Therefore, known solutions for sealing connector devices for flexible tubes, in particular for medical use, do not fully meet the needs of the specific industry.

### Disclosure

The aim of the present invention is to solve the aforementioned problems, by devising a sealing connector device for flexible tubes that allows optimal operation, in particular by facilitating both the connection and disassembly operations.

A further object of the invention is to provide a sealing connector device of simple construction and functional design, versatile use, which is reliable in operation and relatively inexpensive.

The aforementioned objects are achieved, according to the present invention, by the sealing connector device for flexible tubes according to claim 1.

The sealing connector device for flexible tubes according to the invention comprises a tubular element, provided with a tube holding portion on which an end of a tube is intended to be inserted axially, with an attachment portion for connection, for example, to an apparatus, as well as with a tightening portion.

The device also comprises a sleeve adapted to be inserted, in operation, axially around the tube holding portion of the tubular element, with the interposition of the end of the tube to be blocked, and a ring nut provided with a joining portion intended to be joined to the clamping portion of the tubular element and an operative portion adapted to be inserted around the sleeve to press it against the inserted portion of the tube.

According to a feature of the invention the sleeve comprises a plurality of sectors angularly spaced from each other around a respective central axis, and at least one connector, preferably a plurality of connectors, assembled to the aforementioned sectors to connect in a substantially circumferential direction at least a pair, preferably pairs, of adjacent sectors, such that the sleeve can flexibly engage the inserted portion of tube, when the nut is tightened to the clamping portion of the tubular element.

**In** practice, sectors and connectors are distinct elements, intended to be assembled to form the sleeve.

Thanks to the provision of a plurality of independent sectors, assembled to the connector or connectors, the connector device is very advantageous from the production point of view. **In** fact, it is possible to arrange different sectors and connectors in the warehouse, so as to obtain customized connector devices to be assembled, at any time, according to the needs.

Preferably the sectors are formed of a first material and the connectors are made of a second material, the first material being less yielding than the second material, so as to ensure a flexible engagement of the sleeve on the flexible tube, following the intervention of the nut on the outer wall of the same sleeve. Thanks to the diversity of the materials used, it is possible to easily create a yielding sleeve, to obtain an optimal engagement, therefore a correct clamping of the tube on the tube holding portion of the tubular element.

The connectors preferably engage each sector along an extended area of a respective longitudinal edge, so as to ensure in operation a correspondingly extended adhesion of the sleeve to the tube. This avoids a localized compression of the tube, which could damage it and which may compromise disassembly.

At least one pair of adjacent sectors may be interconnected by a plurality of connectors or by a single connector extending longitudinally substantially as the longitudinal edge of the sector, so as to ensure optimal adhesion of the sleeve to the tube along substantially the longitudinal extension.

The sleeve preferably has an outer surface and the nut has an inner operative surface, intended to be compressed on top of each other. **In** practice, the aforementioned outer surface and the operating surface preferably have a conjugated shape, for optimal compression of the end of the tube to be blocked.

The outer surface preferably has a conical shape having the same degree of conicity as the operative surface, so as to ensure optimal compression on the tube in the end zone engaged by the sleeve.

The sleeve has an inner surface preferably bearing a plurality of circumferentially developing teeth, intended to be compressed, in operation, against the outer surface of the flexible tube, for optimal compression. The teeth are preferably spaced, for example evenly, longitudinally, to exert a distributed compression action on the engaged tube.

The sleeve preferably has an annular base adapted to act as an abutment for the head end of the tube, when the latter is inserted on the tube holding portion of the tubular element. This ensures the repeatability and correctness of the clamping.

The aforesaid base preferably peripherally forms a step intended for a shape coupling with the tubular element, in particular with a locking collar shaped thereby, for axially locking the sleeve in the condition assembled to the tubular element, to the tube and to the nut.

**In** particular, it is further possible to modulate the pressure exerted by the teeth of the sectors on the flexible tube, sizing the aforementioned teeth in a corresponding way, so as to entrust the effectiveness of the locking to the sizing of the sectors bearing the teeth, given that the union between the sleeve and nut may be performed in a repeatable manner, thanks to the presence of the annular base of the sleeve, unlike known devices, in which it is entrusted to the sensitivity of the operator who carries out the joining operations, in particular screwing.

The connectors can be shaped in different ways to the sectors, in particular depending on the method chosen for assembling.

For example, the connectors can be shaped like disks, joined in their respective seats to the sectors along their respective facing edges.

Alternatively, the connectors can be formed in the shape of inserts provided with terminal hooks intended to be interlocked or otherwise constrained, in respective shaped seats, obtained on the longitudinal edges of the sectors.

Furthermore, each connector may form a longitudinal stem from which a plurality of shaped hooks, intended to be interlocked in respective shaped seats obtained on longitudinal edges of the sectors, radiate out transversely and from the opposite parts.

Alternatively, the connector can form a single drum, with straight edges, preferably co-molded to adjacent sectors.

At least one connector can be made from a ring or an annular band, thus capable of encircling the adjacent sectors in a substantially circumferential manner.

The connector, particularly in the ring-shaped embodiment, can be at least partially embedded in the sectors.

The connector can advantageously comprise a folded portion, intended to remain uncovered in the condition assembled to the inserts, therefore free to deform, to impart controlled yieldingness to the sleeve.

**In** fact, the sectors can define, therebetween, at least one shaped seat, adapted to accommodate the aforementioned folded section and to define a free space within which the folded section is uncovered and may deform in a controlled way.

The sleeve can comprise a single connector or more ring connectors, to encircle the adjacent sectors in the circumferential direction.

The sectors can be made of steel, in particular stainless steel, or plastic, for example the polyamide fiber in particular called "Nylon", the polyether ether ketone in particular called "Peek" or the polyvinyldenfluoride in particular called "PVDF".

The connectors can be formed of polymeric material, for example silicone or a thermoplastic elastomer, preferably thermoplastic polyurethane (TPU).

Therefore, the sectors and connectors of the connector device can be easily produced, as well as assembled in a fast and versatile way, to compose customized connector devices for each required use.

In particular, the sectors alone can be designed, according to the specific use, by adapting the internal geometry to the diameter of the tube to be blocked.

### Description of drawings

The details of the invention will become more apparent from the detailed description of a preferred embodiment of the sealing connector device for flexible tubes according to the invention, illustrated by way of example in the accompanying drawings, wherein:
Figures 1 and 2 respectively show a perspective view of the connector device according to the invention, with and without a flexible tube inserted;
Figure 3 shows a plan view of the connector device;
Figure 4 shows a sectional view of the same connector device according to an axial plane of line IV-IV, indicated in Figure 3, with a flexible tube inserted;
Figures 5 and 6 respectively show a perspective and sectional view along a longitudinal median plane of a component of the device shown in Figures 1 - 4;
Figures 7 and 8 respectively show a perspective view and a longitudinal section of a further component of the same connector device;
Figures 9 and 10 respectively show a perspective and plan view of a third component of the device;
Figures 11 and 12 show a sectional view respectively according to the cutting plane line XI-XI and XII-XII, indicated in Figure 10, of the third component illustrated in Figure 9;
Figures 13 and 14 respectively show a perspective and plan view of the third component of the device, in a second embodiment;
Figures 15 and 16 show a sectional view respectively according to the XV-XV and XVI-XVI cutting plane line, indicated in figure 14, of the third component illustrated in Figure 13;
Figures 17 and 18 respectively show a perspective and plan view of the third component of the device, in a third embodiment;
Figures 19 and 20 show a sectional view respectively according to the XIX-XIX and XX-XX cutting plane lines, indicated in Figure 18, of the third component illustrated in Figure 19;
Figures 21 and 22 respectively show a perspective and plan view of the third component of the device, in a fourth embodiment;
Figures 23 and 24 show a sectional view respectively according to the cutting plane line XXIII-XXIII and XXIV-XXIV, indicated in Figure 22, of the third component illustrated in Figure 21;
Figures 25 and 26 respectively show a perspective and plan view of the third component of the device, in a fifth embodiment;
Figures 27 and 28 show a sectional view respectively according to the cutting plane line XXVII-XXVII and XXVIII-XXVIII, indicated in Figure 26, of the third component illustrated in Figure 25;
figures 29 and 30 respectively show a perspective and plan view of the third component of the device, in a sixth embodiment;
Figures 31 and 32 show a sectional view respectively according to the cutting plane line XXXI-XXXI and XXXII-XXXII, indicated in Figure 30, of the third component illustrated in Figure 29;
Figures 33 and 34 respectively show a perspective and plan view of the third component of the device, in a seventh embodiment;
Figures 35 and 36 show a sectional view respectively according to the cutting plane line XXXV-XXXV and XXXVI-XXXVI, indicated in Figure 34, of the third component illustrated in Figure 33;
Figure 37 shows a sectional view according to the cutting plane line XXXVII-XXXVII, indicated in Figure 35, of the third component illustrated in Figure 33;
Figures 38 and 39 show a sectional view along a median axial plane of the connector device with a flexible tube inserted, respectively in the absence and in the presence of the additional clamping component.

### Description of embodiments of the invention

With particular reference to these figures, the reference numeral 1 indicates as a whole the sealing connector device for flexible tubes according to the invention.

In particular, the connector device 1 is liquid-tight or powder-tight, for connecting a reusable flexible tube 2, for example of the type used for medical, pharmaceutical or biotech uses, made of silicone, PFA or PTFE, for adduction or distribution of such a liquid or such a powder.

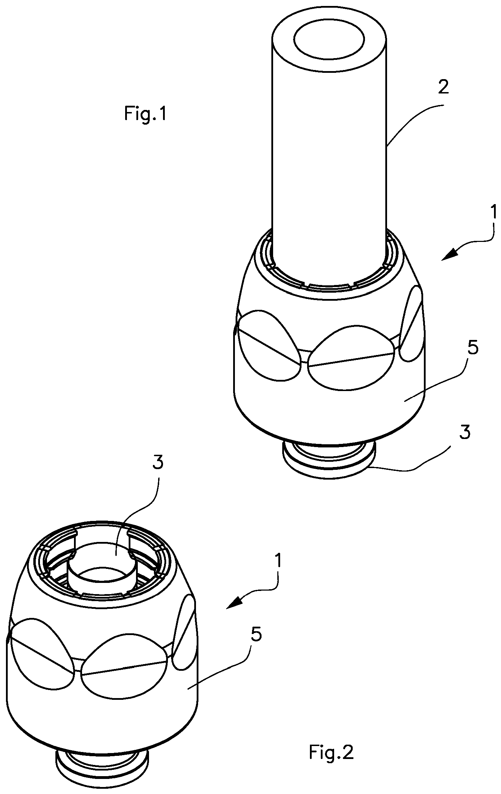

The connector device 1 comprises a tubular element 3 for connecting the flexible tube 2 to an apparatus, for example a medical device, a sleeve 4 and a tightening nut 5, cooperating for the connection of the flexible tube 2 (see Figure 1).

The tubular connecting element 3 is preferably formed of material suitable for contact with liquids, for example with aqueous solutions, or with the conveyed powders, and also suitable for being sterile and/or sterilizable. The tubular element 3 is for example made of metallic material, preferably of stainless steel.

The tubular element 3 comprises a tube holding portion 31 for inserting the flexible tube 2 to be connected, an attachment portion 32 for coupling, for example, to the medical device, and a clamping portion 33 for clamping to the nut 5.

The tubular element 3 internally has a tubular cavity passing around a longitudinal axis A, enabling the passage of the liquid to be dispensed.

The tube holding portion 31, in particular, can have a barbed shape externally, i.e. made from a succession of annular barbs 31a, to facilitate adhesion of the flexible tube 2, once inserted.

The tube holder portion 31 can also have internally, at the open end, a flared inlet 31b.

The connection portion 32 is arranged at the opposite end with respect to the connection portion 31, to enable safe connection to an apparatus or other suitable use.

The attachment portion 32 thus preferably has a cylindrical section 32a connected to a flanged end 32b.

The attachment portion 32 can have, at an attachment surface 32c of the flanged end 32b, a circular recess 32d, able to act as a seat for suitable sealing means, for example a sealing ring of known type.

Alternatively, the attachment portion 32 can have a profile suitable for joining, by butt-welding, the tubular element 2 to an external component.

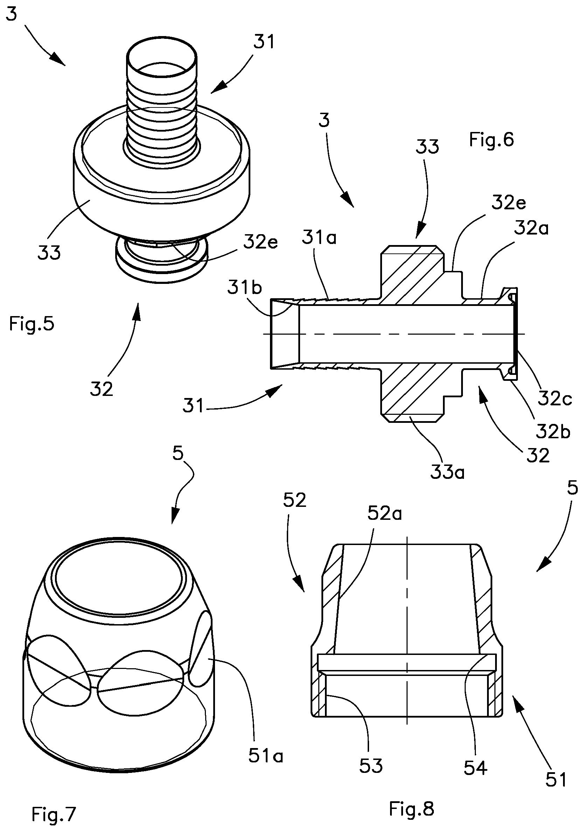

The attachment portion 32 can also form a grip rim 32e, for example, as in the case illustrated in figure 6, formed close to the clamping portion 33 or in another position along the same attachment portion 32. The grip rim 32e can usefully have facets suitable for allowing a firm grip by suitable clamping means, for example of the type of a clamping wrench.

The clamping portion 33 is interposed between the tube holding portion 31 and the attachment portion 32. It preferably has the shape of a protruding collar, therefore with greater outer diameter, than the opposite end portions.

The clamping portion 33 carries means for clamping to the nut 5, preferably of the type of a threaded section 33a, for example cylindrical, adapted to the threaded coupling with a respective internal section of the nut 5, as described in detail below (see Figures 5 and 6).

The sleeve 4 has a substantially conical shape, delimited by an outer surface 4a and an inner surface 4b.

The outer surface 4a has a conical profile, preferably coinciding with the conical profile of the inner surface of the nut 5, to ensure correct tightening, as described below.

The inner surface 4b has a preferably also conical profile which may not coincide with the conicity of the outer surface 4a. The conicity of this profile can be obtained based on the outer diameter of the flexible tube 2, intended to be inserted between the tube holding portion 31 and the sleeve 4.

The inner surface 4b can also carry a plurality of teeth 40 preferably with circumferential development, intended to be compressed, in use, against the outer surface of the flexible tube 2.

The sleeve 4 preferably comprises an annular base 41, delimited by a base opening 42, made around the axis A of the sleeve 4.

The sleeve also has a mouth 43, opposite the base opening 42.

The base opening 42 and the mouth 43 allow insertion of the sleeve 4 around the tube holding portion 31 and the flexible tube 2.

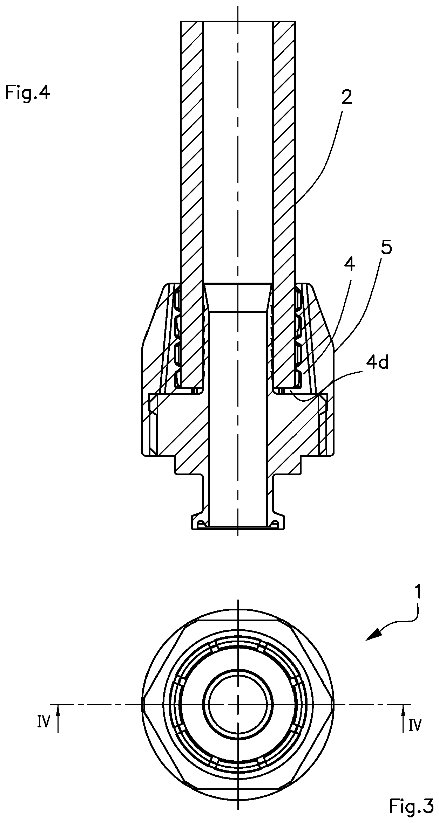

In particular, the base 41 is intended to receive in abutment an end of the tube 2, when it is arranged inside the sleeve 4 around the tube holding portion 31 (see Figure 4).

The sleeve 4 is made by joining a plurality of sectors 44 and a plurality of connectors 45.

The sectors 44 preferably have an independent lamella shape, each preferably having an elongated development in a substantially longitudinal direction.

Each connector 45 may serve as a hook for interconnecting in a transverse, substantially circumferential direction at least a pair of adjacent sectors 44.

The sectors 44 are preferably formed of a first, in particular rigid, material.

The connectors 45 are preferably made of a second material different from the first material, in particular having a lower degree of stiffness than that of the first material. The second material is preferably yielding. It can also be said that the first material is less yielding than the second material.

For example, the first material is a rigid material of the plastic type, for example polyamide fiber in particular called "Nylon", polyether ether ketone in particular called "Peek" or polyvinyldenfluoride in particular called "PVDF", or of the steel type, in particular stainless steel.

Preferably the second material is an elastomer of the silicone or TPU type.

The sectors 44 can be joined to the connectors 45 in ways that may depend on the combination of the chosen materials. For example, steel sectors 44, particularly suitable for high pressure applications, and silicone connectors 45 can be joined by gluing, vulcanization or mechanical joint. Instead, plastic sectors 44 and silicone or TPU connectors 45 may be joined together by, for example, a 3d printing process.

In essence, the connectors 45 attached to the sectors 44 perform the function of conferring on the sleeve 4 the compliance useful to allow a correct compression of the tube 2, when the nut 5 is tightened on the sleeve 4.

The connectors 45 engage each sector 44 preferably along an extended area of a respective longitudinal edge, so as to ensure in use an adhesion of the sleeve 4 to the tube 2, which is not localized, but extended or distributed correspondingly, preferably over the entire longitudinal extension. In this way, the compression on the tube 2 is distributed over a corresponding portion of the outer surface, avoiding the risk of localized compressions.

In particular, the sectors 44 can bear at a respective end a radial projection in the shape of a shelf, adapted to form the aforementioned base 41 of the sleeve 4.

For each sector 44, in particular for each respective longitudinal edge, one or more shaped seats 46 can be provided to respectively receive one or more connectors 45.

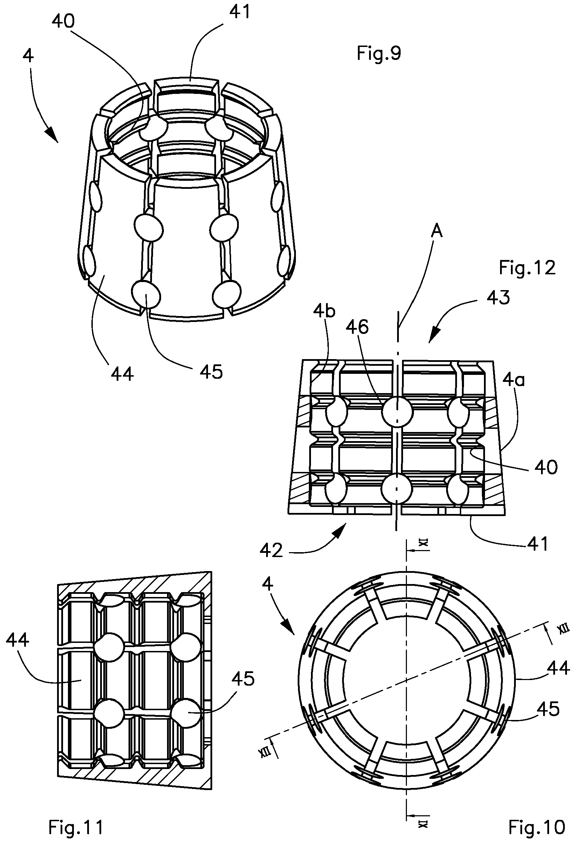

According to a first embodiment, illustrated in figures 9 - 12, the connectors 45 have the shape of a series of disks.

For example, for each longitudinal edge of each sector 44, several shaped seats 46 can be provided for receiving respective connection discs.

Finally, the clamping nut 5 shown in Figures 7 and 8 comprises a junction portion 51, preferably substantially cylindrical, and an operative portion 52, adapted to cooperate with the clamping sleeve 4, for clamping the flexible tube 2 to be connected.

**In** particular, the junction portion 51 internally comprises a section 53 for coupling the tubular element 3 to the clamping means. The coupling section 53 is preferably made of a threaded surface.

The junction portion 51 externally has the shape of a nut, comprising a gripping surface 51a, suitable for manual tightening or adapted to be engaged by a tool such as a tightening wrench.

The operative portion 52 internally has an operative surface 52a which therefore has a progressively decreasing diameter, preferably of a conical shape, to engage, by compressing it on the flexible tube 2, the external surface 4a of the sleeve 4, which advantageously can have the same conicity (see the Figure 4).

Advantageously, a shoulder 54 can be provided inside the nut 5 between the operative surface 52a and the coupling section 53 which can act as a stop for a tightening stroke of the nut 5 on the clamping portion 33 of the tubular element 3.

The operation of the sealing connector device for flexible tubes according to the invention, an example of which is given below, can be easily understood from the foregoing description.

**In** a preparation step, the sleeve 4 is inserted around the tube holding portion 31 of the tubular element 3. **In** particular, the base 41 abuts against a respective shoulder wall of the clamping portion 33 of the tubular element 3.

The nut 5 is inserted around the flexible tube 2 to be connected, at a respective end.

This end of the flexible tube 2, bearing the nut 5, is inserted around the tube holding portion 31 of the tubular element 3, inside the sleeve 4, already arranged to abut the clamping portion 33 of the tubular element 3. The terminal end of the tube 2 is inserted along the longitudinal axis A until it is brought up against the base 41 of the sleeve 4, which therefore acts as a seat for the tube 2, so ensuring correct and repeatable reciprocal positioning.

Finally, the nut 5 is slid along the tube 2 and brought around the sleeve 4. The nut 5 is then tightened to the tubular element 3, preferably by screwing at the respective threaded coupling section 53, by engagement on the tightening portion 33. This operation can preferably take place by manual tightening or by means of a suitable wrench tool. The tightening stroke of the nut 5 has an extension determined by the provision of the internal shoulder 54, which stops the screwing when it reaches the front edge, according to a screwing direction, of the clamping portion 33.

More precisely, while the nut 5 accomplishes the tightening stroke, the sleeve 4 is compressed close to the external surface of the tube 2 along the entire longitudinal extension, thanks to the conjugate shape, in particular the same conicity of the operating surface 52a of the nut 5 at the operative section 52 and the outer surface 4a of the sleeve 4.

Furthermore, thanks to the compliance of the connectors 45, preferably greater than the compliance of the sectors 44, the internal surface 4b of the sleeve 4, preferably designed according to the external diameter of the tube 2, can adhere in an optimal way, along the entire longitudinal development, on the outer surface of the latter.

Advantageously, also the teeth 40 provided internally along the sleeve 4, preferably along the sectors 44, can cooperate in the complete adhesion of the sleeve 4 to the tube 2.

The flexible tube 2 is thus firmly connected to the connector device 1.

**In** order o disassemble the sleeve 4 from the tubular element 3 it is sufficient to uncouple the nut 5 from the tubular element 3, so releasing the sleeve 4. At this point the nut 5 can slide freely along the tube 2, at the end of which the sleeve 4 is free, both with respect to the tubular element 3 and to the tube 2. **In** particular, the tube 2 can be easily removed from the tube holding portion 31 of the tubular element 3.

The connector device according to the invention therefore makes it possible to achieve the aim of providing a secure and at the same time easy connection for both the hooking and unhooking operations of a flexible tube.

This is due in particular to the particular structure of the sleeve 4 and of the nut 5, thanks to which a distributed rather than localized compression is exerted on the tube 2.

This distributed compression, preferably along the entire end portion of the tube 2 interposed between the sleeve 4 and the tube holding portion 31, avoids a concentrated adhesion of the sleeve 4, which could cause unwanted grooves on the tube 2.

This distributed compression is made possible by the coupling of sectors and connectors suitable for composing the sleeve 4, which are preferably made of different materials. In particular, the connectors are preferably made of a more yielding material than the material of which the sectors are made.

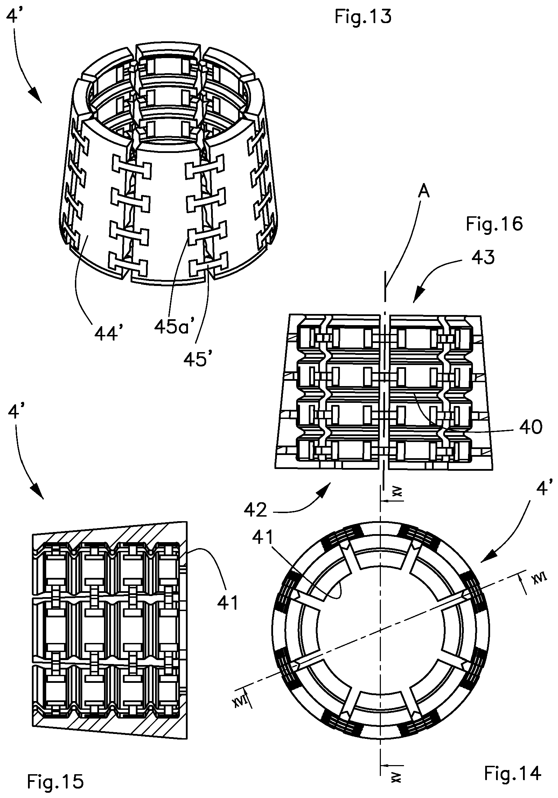

According to a further embodiment of the sleeve 4', illustrated in Figures 13 - 16, and otherwise completely similar both structurally and functionally to the embodiment described above, the connectors 45' can be made in the form of double T inserts arranged transversely to the longitudinal edges of the sectors 44'. **In** particular, the opposite T-shaped ends act as hooks 45a' for an interlocking coupling in the respective seats 46' of the sectors 44'. In particular, a plurality of connectors 45', for example four, preferably uniformly spaced apart, can be fixed on the respective facing longitudinal edges of each pair of sectors 44'.

Alternatively, the connectors 45' can be shaped in a different way, provided that they are able to stably constrain the sectors 44'.

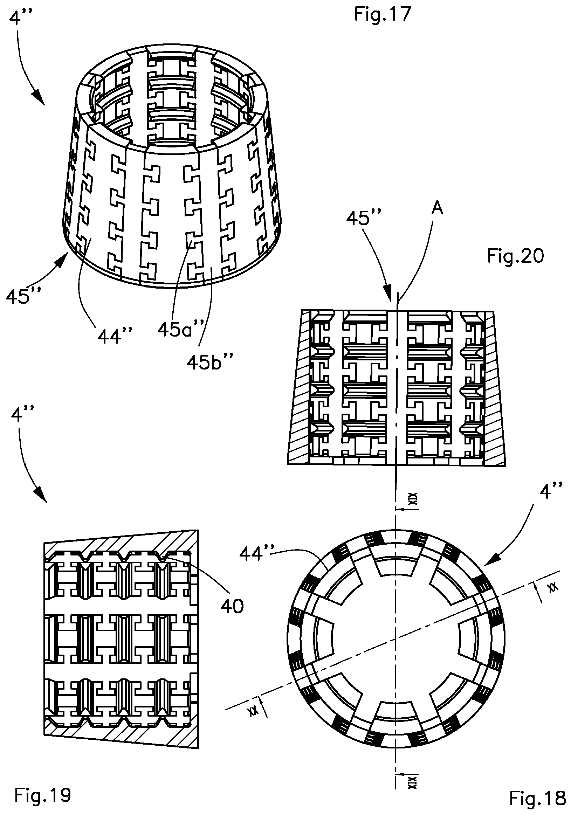

According to a third embodiment of the sleeve 4", illustrated in Figures 17 - 20, and otherwise completely similar to the embodiments described previously, a connector 45", preferably single, is provided between a pair of adjacent sectors 44". This connector 45" forms a longitudinal stem 45b" from which a plurality of shaped hooks 45a" branch off transversally and on opposite sides, for example in the shape of a T as in the third illustrated embodiment, to guarantee a preferably interlocking interconnection. The sectors 44" have correspondingly shaped seats 46", distributed on the facing longitudinal edges, to receive such hooks by interlocking. Obviously other embodiments for the hooks 45a', 45a" are possible, for example dovetail or similar shape.

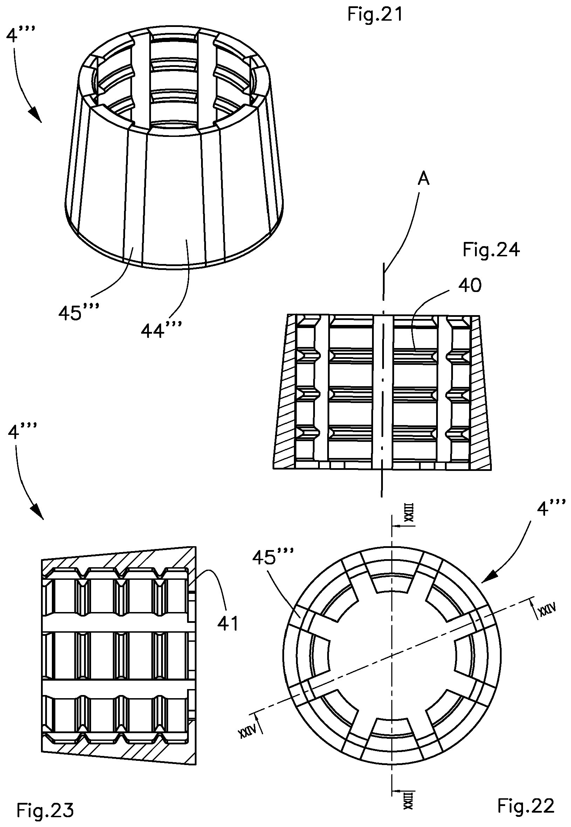

According to a fourth embodiment, illustrated in figures 21 - 24, each connector 45‴ is made from a single stem, preferably co-molded to the adjacent sectors 44‴. In particular, both the sectors 44‴ and the connectors 45‴ shape preferably straight edges.

The reciprocal junction is preferably made by co-molding with a 3D printer or by gluing or vulcanizing the connectors 45‴, preferably in silicone or TPU, to the sectors 44"', preferably made in stainless steel. The connectors 45" can be made from silicone or TPU plates.

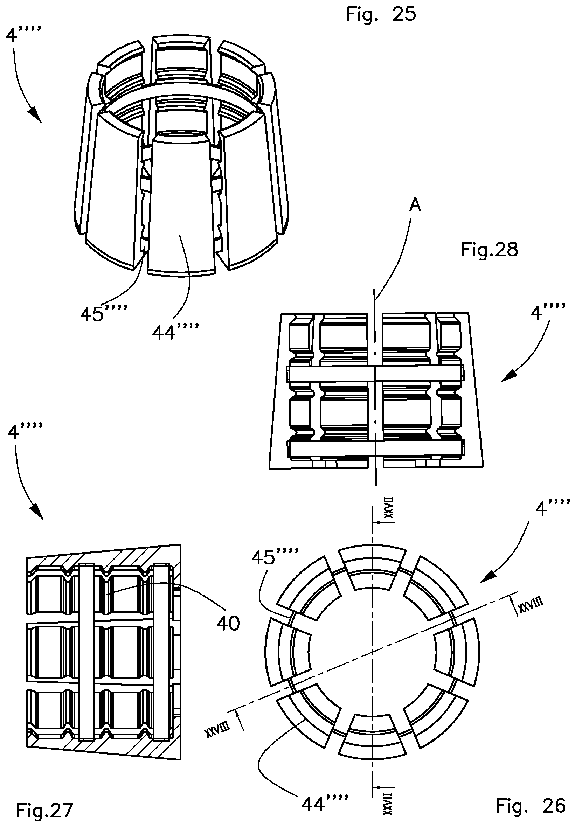

According to a fifth embodiment, illustrated in Figures 25 to 28, each connector 45ʺʺ is made from a ring or an annular band, therefore capable of encircling the adjacent sectors 44ʺʺ in a substantially circumferential manner, in particular, all sectors 44ʺʺ.

The sleeve 4ʺʺ preferably comprises a series of annular connectors 45ʺʺ, for example a pair, forming for example respective encircling bands, hooked to the sectors 44ʺʺ and arranged in succession substantially from the base 41 to the top of the sleeve 4ʺʺ.

Alternatively, the sleeve 4ʺʺ can also include a single encircling connector 45ʺʺ.

Each ring connector 45ʺʺ may have, for example, a quadrangular, for example rectangular or square, or substantially circular section.

This solution is particularly advantageous as it has a reduced number of pieces to obtain the connection encircling effect, which in turn guarantees the compliance of the sleeve 4ʺʺ.

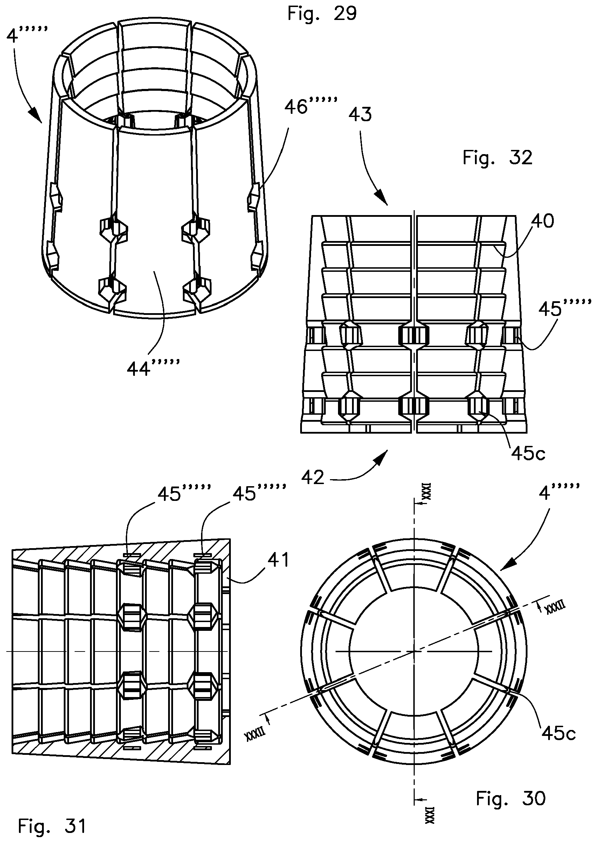

According to a sixth embodiment, illustrated in Figures 29 - 31, the connector 45‴ʺ, as in the fifth embodiment described, is made by a ring or an encircling annular band, so as to encircle in a substantially circumferential way adjacent sectors 44‴ʺ, in particular, all sectors 44‴ʺ.

The sleeve 4‴ʺ can comprise a single connector 45‴ʺ or, as in the illustrated case, a plurality, for example a pair, of encircling connectors 45‴ʺ.

The sleeve 4ʺʺ preferably comprises a series, in particular a pair, of annular connectors 45ʺʺ, each being embedded in the thickness of the sectors 44‴ʺ. The assembly between the 45‴ʺ connector and the inserts 44‴ʺ therefore guarantees optimal stability, resistant to a forcing action.

The connectors 45‴ʺ are preferably spaced along the longitudinal axis A of the sleeve 4‴ʺ, so as to ensure a correspondingly extended compression on the flexible tube 2 to be connected.

Each annular connector 45ʺʺ preferably comprises a bent portion 45c, uncovered, suitable for conferring a controlled compliance to the sleeve 4‴ʺ.

Correspondingly, the sectors 44‴ʺ define between them shaped seats 46‴ʺ, suitable for receiving the bent portions 45c. More precisely, the seats 46‴ʺ, which are defined between adjacent longitudinal edges of the sectors 44‴ʺ, serve to create a free space for the bent sections 45c, in which the latter can deform in a controlled way, depending on the geometry of the connector tube 2.

This solution is particularly advantageous as it has optimal performance in terms of the stability of the junction between the sectors and the connectors and the overall deformability of the sleeve.

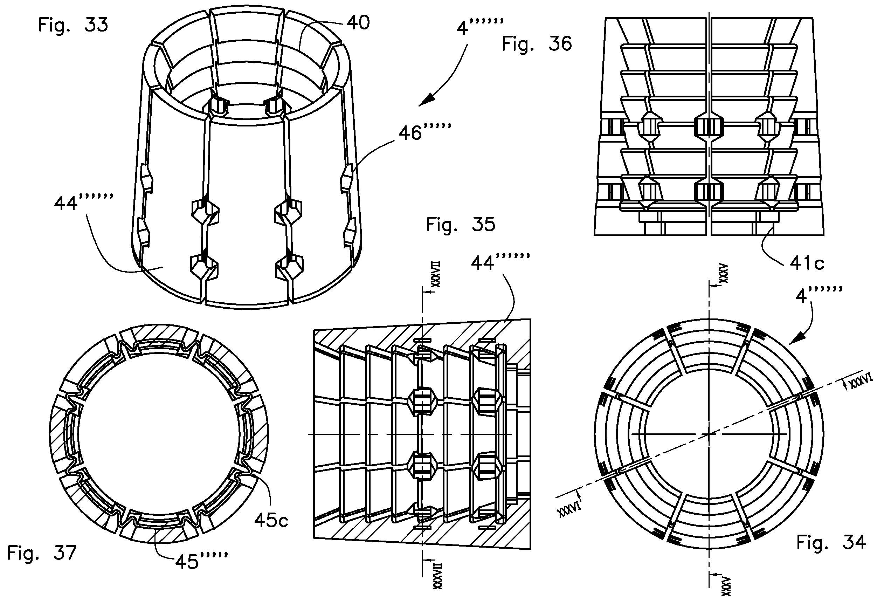

According to a seventh embodiment, illustrated in figures 33 - 39, the sleeve 4‴‴ forms a step 41a at the base 41 intended for a shape coupling with the tubular element 3, in particular with the tube holding portion 31.

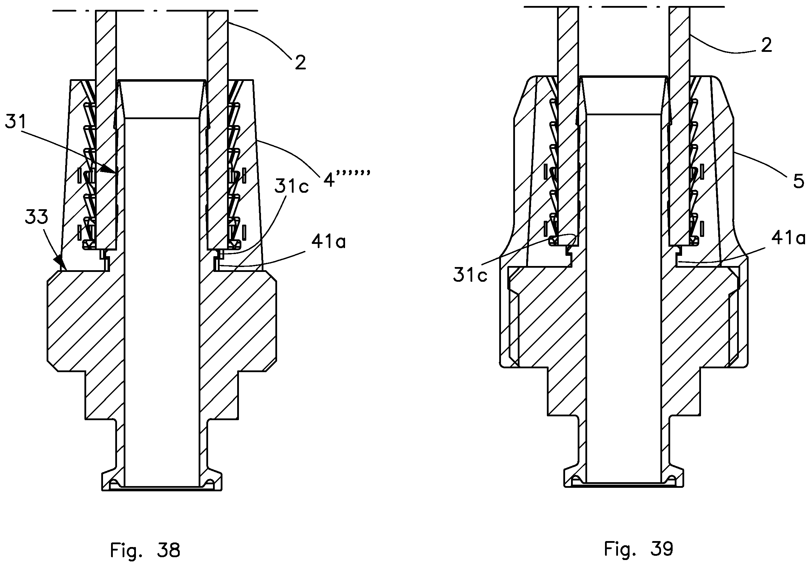

More precisely, the tubular element 3 in turn forms a locking collar 31c, able to define with the shoulder wall of the clamping portion 33 a locking seat for the aforementioned step 41a (see Figures 38 and 39).

**In** practice, the coupling between the step 41a and the tube holding portion 31 blocks the sleeve 4‴‴ axially, preventing it from sliding axially. Therefore, even if the sleeve adheres to the tube 3, it is possible to disassemble only the tube 3 from the connector device without dragging the sleeve.

The inserts 44‴‴ are made, for the rest, for example as in the previous embodiment.

Also the connectors are made as in the sixth embodiment illustrated and have therefore been indicated with the corresponding reference number 45‴ʺ.

However, the provision of an axially locked coupling between the tube holding portion 31 and the sleeve, by means of the special conformation of the sleeve, is also applicable to the other embodiments of the inserts and connectors of the sleeve.

This solution, in any case, is particularly advantageous as it effectively contrasts the friction generated between the inside of the nut 5 and the sleeve, in particular the inserts, during the unscrewing step.

The operation of the connector device according to this variant is entirely similar to that described above. It should only be underlined that before the screwing of the nut 5, the step 41a is axially free, distant from the locking collar 31c (see figure 38), while after the screwing of the nut 5, the step 41a is approached to the tube holding portion 31, firmly locked axially by the locking collar 31c (see Figure 39).

For the embodiments described in Figures 9 - 39, the same numerals have been used to indicate structurally and functionally similar technical characteristics.

The operation described is substantially similar to that described above for the first embodiment of the further embodiments.

**In** the practical embodiment of the invention, the materials used, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. A sealing connector device for flexible tubes, comprising a tubular element (3) provided with a tube holding portion (31) on which one end of said tube (2) is intended to be inserted axially, with an attachment portion (32) for the connection, for example, to an apparatus, and with a clamping portion (33), said device further comprising a sleeve (4, 4', 4", 4‴, 4ʺʺ, 4‴ʺ, 4‴‴) adapted, in use, to be inserted axially around said tube holding portion (31) of said tubular element (3), with the interposition of said end of said tube (2), and a nut (5) provided with a junction portion (51) intended for joining said clamping portion (33) of said tubular element (3) and with an operating portion (52) suitable for being inserted around said sleeve (4, 4', 4", 4‴, 4ʺʺ, 4‴ʺ, 4‴‴) to compress it against said inserted portion of said tube (2), wherein said sleeve (4 , 4', 4", 4"', 4ʺʺ, 4‴ʺ, 4‴‴) includes a plurality of sectors (44, 44', 44", 44‴, 44ʺʺ, 44‴ʺ, 44‴‴) angularly spaced from one another around a respective central axis (A), **characterized by** one or more connectors (45 , 45', 45", 45"', 45ʺʺ, 45‴ʺ) assembled to said adjacent sectors (44, 44', 44", 44‴, 44ʺʺ , 44‴ʺ, 44‴‴) to connect in a substantially circumferential direction one or more pairs of said sectors (44, 44', 44", 44‴, 44ʺʺ, 44‴ʺ, 44‴‴), so that said sleeve (4, 4', 4", 4‴, 4ʺʺ, 4‴ʺ, 4‴‴) can engage, in a flexible way, said inserted portion of said tube (2), when said nut (5) is tightened to said clamping portion (33) of said tubular element (3).

2. The device of claim 1, wherein said sectors (44, 44', 44", 44‴, 44ʺʺ, 44‴ʺ, 44‴‴) are made of a first material and said one or more connectors (45, 45', 45", 45‴, 45ʺʺ, 45‴ʺ) are made of a second material, said first material being less yielding with respect to said second material.

3. The device of claim 1 or 2, wherein said one or more connectors (45, 45', 45", 45‴, 45ʺʺ, 45‴ʺ) engage each sector (44, 44', 44", 44‴, 44ʺʺ, 44‴ʺ, 44‴‴) along an extended area of a respective longitudinal edge, so as to guarantee in operation adhesion of said sleeve (4, 4', 4", 4‴, 4ʺʺ, 4‴ʺ, 4‴‴) to said tube (2), extending in corresponding way.

4. The device of claim 3, wherein at least one pair of adjacent sectors (44, 44', 44", 44‴, 44ʺʺ) is interconnected by one or more connectors (45, 45', 45"", 45‴ʺ) or by means of a single connector (45", 45‴) which extends longitudinally substantially as much as said longitudinal edge of said sector (44, 44', 44", 44"').

5. The device of any one of the preceding claims, wherein said sleeve (4, 4', 4", 4‴, 4ʺʺ, 4‴ʺ, 4‴‴) has an external surface (4a) and said nut (5) has an internal operative surface (52a), said external surface (4a) and said operative surface (52a) being intended to be compressed one on the other and having a conjugated shape, for optimal compression of said end of said tube (2).

6. The device of claim 5, wherein said external surface (4a) has a conical shape having the same degree of conicity as said operative surface (52a).

7. The device according to any one of the preceding claims, wherein said sleeve (4, 4', 4", 4‴, 4ʺʺ, 4‴ʺ, 4‴‴) has an internal surface (4b) bearing a plurality of teeth (40) with circumferential development, intended to be compressed, in operation, against the external surface of said flexible tube (2).

8. The device of any one of the preceding claims, wherein said sleeve (4, 4', 4", 4‴, 4ʺʺ, 4‴ʺ, 4‴‴) has an annular base (41) adapted to act as an abutment for the head end of said tube (2).

9. The device of claim 8, wherein said base (41) peripherally shapes a step (41a) intended for a shape coupling with said tubular element (3), to axially lock said sleeve (4‴‴), in the assembled condition with said tubular element (3), said tube (2) and said nut (5).

10. The device of any one of the preceding claims, wherein said connector (45ʺʺ, 45‴ʺ) is at least partially embedded in said sectors (44‴ʺ, 44‴‴).

11. The device of any one of the preceding claims, wherein said one or more connectors (45) are discs-shaped, joined in respective seats (46) to said sectors (44) along respective facing edges.

12. The device of any one of claims 1 - 10, wherein said one or more connectors (45') are shaped like inserts provided with end hooks (45a') intended to be joined together or constrained in respective shaped seats (46') formed on the longitudinal edges of said sectors (44').

13. The device according to one of claims 1 - 10, wherein each connector (45") shapes a longitudinal stem (45b") from which a plurality of shaped hooks (45a") branches out transversely and from the opposite sides, intended to be joined by interlocking in respective shaped seats (46") obtained on the longitudinal edges of said sectors (44").

14. The device of any one of claims 1 - 10, wherein each connector (45‴) shapes a single stem, with straight edges, preferably co-molded with said adjacent sectors (44‴).

15. The device of any one of claims 1 - 10, wherein at least one said connector (45ʺʺ, 45‴ʺ, 45‴ʺ) is made by a ring, therefore adapted to encircle substantially circumferentially said adjacent sectors (44ʺʺ, 44‴ʺ, 44‴‴).

16. The device of claim 15, wherein said connector (45‴ʺ, 45‴ʺ) comprises a bent portion (45c) intended to remain uncovered when assembled to said inserts (44‴ʺ, 44‴‴), to impart a controlled compliance to said sleeve (4"", 4‴‴).

17. The device of claim 16, wherein said sectors (44‴ʺ, 44‴‴) define at least one shaped seat (46‴ʺ, 46‴‴) between them, adapted to accommodate said bent portion (45c) and to define a free space within which said bent portion (45c) is uncovered and can deform in a controlled manner.

18. The device of any one of the preceding claims, wherein said sectors (44, 44', 44", 44‴, 44ʺʺ, 44‴ʺ, 44‴‴) are made of steel or plastic.

19. The device of any one of the preceding claims, wherein said connectors (45, 45', 45", 45‴, 45ʺʺ, 45‴ʺ) are made of silicone or TPU.

20. The device of any one of the preceding claims, wherein it comprises a plurality of said connectors (45, 45', 45", 45‴, 45ʺʺ, 45‴ʺ) assembled to said sectors (44, 44', 44", 44‴, 44ʺʺ, 44‴ʺ, 44‴‴) to connect pairs of said sectors (44, 44') in a substantially adjacent circumferential direction (44, 44', 44", 44‴, 44ʺʺ, 44‴ʺ, 44‴‴).

## Patentansprüche

1. Dichtverbindungsvorrichtung für flexible Schläuche, umfassend ein rohrförmiges Element (3), das mit einem Schlauchhalteabschnitt (31) bereitgestellt ist, in den ein Ende des Schlauchs (2) dazu vorgesehen ist, axial eingeführt zu werden, mit einem Befestigungsabschnitt (32) zum Anschluss beispielsweise an ein Gerät und mit einem Klemmabschnitt (33), wobei die Vorrichtung ferner eine Hülse (4, 4', 4", 4‴, 4ʺʺ, 4‴ʺ, 4‴‴) umfasst, die dazu angepasst ist, im Gebrauch axial um den Schlauchhalteabschnitt (31) des rohrförmigen Elements (3) unter Zwischenanordnung des Endes des Schlauchs (2) herum angeordnet zu werden, sowie eine Mutter (5), die mit einem Verbindungsabschnitt (51) bereitgestellt ist, der zum Verbinden des Klemmabschnitts (33) des rohrförmigen Elements (3) vorgesehen ist, und mit einem Betätigungsabschnitt (52), der dazu geeignet ist, um die Hülse (4, 4', 4", 4‴, 4ʺʺ, 4‴ʺ, 4""") herum eingeführt zu werden, um diese gegen den eingeführten Abschnitt des Schlauchs (2) zu komprimieren, wobei
die Hülse (4, 4', 4", 4‴, 4ʺʺ, 4ʺʺ, 4‴‴) eine Vielzahl von Sektoren (44, 44', 44", 44‴, 44ʺʺ, 44‴ʺ, 44‴‴) einschließt, die um eine jeweilige Mittelachse (A) herum winkelmäßig voneinander beabstandet sind, **dadurch gekennzeichnet, dass** ein oder mehrere Verbinder (45, 45', 45", 45‴, 45ʺʺ, 45‴ʺ) an den benachbarten Sektoren (44, 44', 44", 44‴, 44ʺʺ, 44‴ʺ, 44‴‴) montiert sind, um in einer im Wesentlichen in Umfangsrichtung verlaufenden Richtung ein oder mehrere Paare der Sektoren (44, 44', 44", 44‴, 44ʺʺ, 44‴ʺ, 44""") zu verbinden, sodass die Hülse (4, 4', 4", 4"', 4ʺʺ, 4""', 4""") in flexibler Weise mit dem eingeführten Abschnitt des Schlauchs (2) in Eingriff gelangen kann, wenn die Mutter (5) an dem Klemmabschnitt (33) des rohrförmigen Elements (3) festgezogen wird.

2. Vorrichtung nach Anspruch 1, wobei die Sektoren (44, 44', 44", 44"', 44ʺʺ, 44‴ʺ, 44‴‴) aus einem ersten Material hergestellt sind und der eine oder die mehreren Verbinder (45, 45', 45", 45‴, 45"", 45‴ʺ) aus einem zweiten Material hergestellt sind, wobei das erste Material in Bezug auf das zweite Material weniger nachgiebig ist.

3. Vorrichtung nach Anspruch 1 oder 2, wobei der eine oder die mehreren Verbinder (45, 45', 45", 45"', 45ʺʺ, 45‴ʺ) mit jedem Sektor (44, 44', 44", 44‴, 44ʺʺ, 44‴ʺ, 44‴‴) entlang eines erstreckten Bereichs einer jeweiligen Längskante in Eingriff stehen, um im Betrieb eine Haftung der Hülse (4, 4', 4", 4‴, 4ʺʺ, 4‴ʺ, 4""") an dem Schlauch (2) zu gewährleisten, die sich in entsprechender Weise erstreckt.

4. Vorrichtung nach Anspruch 3, wobei mindestens ein Paar benachbarter Sektoren (44, 44', 44", 44‴, 44ʺʺ) durch einen oder mehrere Verbinder (45, 45', 45ʺʺ, 45‴ʺ) oder mittels eines einzelnen Verbinders (45", 45‴) miteinander verbunden ist, der sich in Längsrichtung im Wesentlichen ebenso weit erstreckt wie die Längskante des Sektors (44, 44', 44", 44"').

5. Vorrichtung nach einem der vorstehenden Ansprüche, wobei die Hülse (4, 4', 4", 4"', 4ʺʺ, 4‴ʺ, 4‴‴) eine Außenfläche (4a) und die Mutter (5) eine innere Betätigungsfläche (52a) aufweist, wobei die Außenfläche (4a) und die Betätigungsfläche (52a) dazu vorgesehen sind, aneinander gedrückt zu werden, und eine zueinander passende Form aufweisen, um das Ende des Schlauchs (2) optimal zusammenzudrücken.

6. Vorrichtung nach Anspruch 5, wobei die Außenfläche (4a) eine konische Form mit demselben Konizitätsgrad wie die Betätigungsfläche (52a) aufweist.

7. Vorrichtung nach einem der vorstehenden Ansprüche, wobei die Hülse (4, 4', 4", 4‴, 4ʺʺ, 4‴ʺ, 4‴‴) eine Innenfläche (4b) aufweist, die eine Vielzahl von Zähnen (40) mit einer in Umfangsrichtung verlaufenden Erstreckung trägt, die dazu vorgesehen sind, im Betrieb gegen die Außenfläche des flexiblen Schlauchs (2) gedrückt zu werden.

8. Vorrichtung nach einem der vorstehenden Ansprüche, wobei die Hülse (4, 4', 4", 4‴, 4ʺʺ, 4‴ʺ, 4‴‴) eine ringförmige Basis (41) aufweist, die angepasst ist, um als Anschlag für das Kopfende des Schlauchs (2) zu wirken.

9. Vorrichtung nach Anspruch 8, wobei die Basis (41) umfangsseitig eine Stufe (41a) bildet, die für eine Formkopplung mit dem rohrförmigen Element (3) vorgesehen ist, um die Hülse (4‴‴) in dem montierten Zustand mit dem rohrförmigen Element (3), dem Schlauch (2) und der Mutter (5) axial zu verriegeln.

10. Vorrichtung nach einem der vorstehenden Ansprüche, wobei der Verbinder (45"", 45‴‴) zumindest teilweise in den Sektoren (44‴ʺ, 44‴‴) eingebettet ist.

11. Vorrichtung nach einem der vorstehenden Ansprüche, wobei der eine oder die mehreren Verbinder (45) scheibenförmig sind und entlang jeweiliger einander zugewandter Kanten in entsprechenden Aufnahmen (46) mit den Sektoren (44) verbunden sind.

12. Vorrichtung nach einem der Ansprüche 1 bis 10, wobei der eine oder die mehreren Verbinder (45') wie Einsätze geformt sind, die mit Endhaken (45a') bereitgestellt sind, die dazu vorgesehen sind, miteinander verbunden oder in entsprechenden, an den Längskanten der Sektoren (44') gebildeten, geformten Aufnahmen (46') festgehalten zu werden.

13. Vorrichtung nach einem der Ansprüche 1 bis 10, wobei jeder Verbinder (45") einen Längsschaft (45b") bildet, von dem eine Vielzahl von geformten Haken (45a") quer und von den gegenüberliegenden Seiten abzweigt, die dazu vorgesehen sind, durch Ineinandergreifen in jeweiligen geformten Aufnahmen (46") verbunden zu werden, die an den Längskanten der Sektoren (44") erhalten sind.

14. Vorrichtung nach einem der Ansprüche 1 bis 10, wobei jeder Verbinder (45‴) einen einzelnen Schaft mit geraden Kanten bildet, der vorzugsweise mit den benachbarten Sektoren (44‴) angespritzt ist.

15. Vorrichtung nach einem der Ansprüche 1 bis 10, wobei mindestens ein Verbinder (45ʺʺ, 45‴ʺ, 45‴ʺ) aus einem Ring besteht und somit angepasst ist, die benachbarten Sektoren (44ʺʺ, 44‴ʺ, 44‴‴) im Wesentlichen in Umfangsrichtung zu umschließen.

16. Vorrichtung nach Anspruch 15, wobei der Verbinder (45‴ʺ, 45‴ʺ) einen gebogenen Abschnitt (45c) umfasst, der dazu vorgesehen ist, freizuliegen, wenn er an den Einsätzen (44‴ʺ, 44‴‴) montiert ist, um der Hülse (4ʺʺ, 4‴‴) eine kontrollierte Nachgiebigkeit zu verleihen.

17. Vorrichtung nach Anspruch 16, wobei die Sektoren (44‴ʺ, 44‴‴) zwischen sich mindestens eine geformte Aufnahme (46‴ʺ, 46‴‴) bilden, die angepasst ist, um den gebogenen Abschnitt (45c) aufzunehmen und einen Freiraum zu definieren, innerhalb dessen der gebogene Abschnitt (45c) freiliegt und sich auf kontrollierte Weise verformen kann.

18. Vorrichtung nach einem der vorstehenden Ansprüche, wobei die Sektoren (44, 44', 44", 44"', 44"", 44", 44""") aus Stahl oder Kunststoff hergestellt sind.

19. Vorrichtung nach einem der vorstehenden Ansprüche, wobei die Verbinder (45, 45', 45", 45‴, 45"", 45‴ʺ) aus Silikon oder TPU hergestellt sind.

20. Vorrichtung nach einem der vorstehenden Ansprüche, wobei sie eine Vielzahl der Verbinder (45, 45', 45", 45‴, 45ʺʺ, 45‴ʺ) umfasst, die an den Sektoren (44, 44', 44", 44‴, 44"", 44‴ʺ, 44""") montiert sind, um Paare der Sektoren (44, 44') in einer im Wesentlichen benachbarten Umfangsrichtung (44, 44', 44", 44"', 44ʺʺ, 44""', 44""") miteinander zu verbinden.

## Revendications

1. Dispositif de raccord étanche pour tubes souples, comprenant un élément tubulaire (3) muni d'une partie de maintien de tube (31) sur laquelle une extrémité dudit tube (2) est destinée à être insérée axialement, d'une partie de fixation (32) pour le raccordement, par exemple, à un appareil, et d'une partie de serrage (33), ledit dispositif comprenant en outre un manchon (4, 4', 4", 4‴, 4"", 4‴ʺ, 4""") adapté, en utilisation, pour être inséré axialement autour de ladite partie de maintien de tube (31) dudit élément tubulaire (3), avec l'interposition de ladite extrémité dudit tube (2), et un écrou (5) muni d'une partie de jonction (51) destinée à joindre ladite partie de serrage (33) dudit élément tubulaire (3) et d'une partie opérationnelle (52) adaptée pour être insérée autour dudit manchon (4, 4', 4", 4"', 4ʺʺ, 4""', 4""") pour le comprimer contre ladite partie insérée dudit tube (2), dans lequel
ledit manchon (4, 4', 4", 4"', 4ʺʺ, 4‴ʺ, 4""") comprend une pluralité de secteurs (44, 44', 44", 44"', 44"", 44‴ʺ, 44""") espacés angulairement les uns des autres autour d'un axe central respectif (A), **caractérisé par**
un ou plusieurs raccords (45, 45', 45", 45‴, 45"", 45""') assemblés auxdits secteurs (44, 44', 44", 44‴, 44"", 44""', 44""") adjacents pour raccorder dans une direction sensiblement circonférentielle une ou plusieurs paires desdits secteurs (44, 44', 44", 44"', 44"", 44‴ʺ, 44"""), de sorte que ledit manchon (4, 4', 4", 4"', 4"", 4‴ʺ, 4""") puisse venir en prise, de manière flexible, avec ladite partie insérée dudit tube (2), lorsque ledit écrou (5) est serré sur ladite partie de serrage (33) dudit élément tubulaire (3).

2. Dispositif selon la revendication 1, dans lequel lesdits secteurs (44, 44', 44", 44‴, 44ʺʺ, 44""', 44""") sont constitués d'un premier matériau et lesdits un ou plusieurs raccords (45, 45', 45", 45‴, 45"", 45‴ʺ) sont constitués d'un second matériau, ledit premier matériau étant moins flexible par rapport audit second matériau.

3. Dispositif selon la revendication 1 ou 2, dans lequel lesdits un ou plusieurs raccords (45, 45', 45", 45"', 45"", 45"") viennent en prise avec chaque secteur (44, 44', 44", 44"', 44"", 44‴ʺ, 44""") le long d'une zone étendue d'un bord longitudinal respectif, de manière à garantir en fonctionnement l'adhérence dudit manchon (4, 4', 4", 4‴, 4ʺʺ, 4‴ʺ, 4""") audit tube (2), s'étendant de manière correspondante.

4. Dispositif selon la revendication 3, dans lequel au moins une paire de secteurs (44, 44', 44", 44"', 44"") adjacents sont raccordés entre eux par un ou plusieurs raccords (45, 45', 45"", 45‴ʺ) ou au moyen d'un raccord unique (45", 45‴) qui s'étend longitudinalement sensiblement autant que ledit bord longitudinal dudit secteur (44, 44', 44", 44‴).

5. Dispositif selon l'une quelconque des revendications précédentes, dans lequel ledit manchon (4, 4', 4", 4"', 4ʺʺ, 4‴ʺ, 4""") présente une surface externe (4a) et ledit écrou (5) présente une surface opérationnelle (52a) interne, ladite surface externe (4a) et ladite surface opérationnelle (52a) étant destinées à être comprimées l'une sur l'autre et présentant une forme conjuguée, pour une compression optimale de ladite extrémité dudit tube (2).

6. Dispositif selon la revendication 5, dans lequel ladite surface externe (4a) présente une forme conique présentant le même degré de conicité que ladite surface opérationnelle (52a).

7. Dispositif selon l'une quelconque des revendications précédentes, dans lequel ledit manchon (4, 4', 4", 4‴, 4ʺʺ, 4‴ʺ, 4""") présente une surface interne (4b) portant une pluralité de dents (40) à développement circonférentiel, destinées à être comprimées, en fonctionnement, contre la surface externe tube (2) souple.

8. Dispositif selon l'une quelconque des revendications précédentes, dans lequel ledit manchon (4, 4', 4", 4‴, 4ʺʺ, 4""', 4""") comprend une base annulaire (41) adaptée pour agir comme une butée pour l'extrémité de tête dudit tube (2).

9. Dispositif selon la revendication 8, dans lequel ladite base (41) forme périphériquement un cran (41a) destiné à un couplage de forme avec ledit élément tubulaire (3), pour verrouiller axialement ledit manchon (4"""), à l'état assemblé avec ledit élément tubulaire (3), ledit tube (2) et ledit écrou (5).

10. Dispositif selon l'une quelconque des revendications précédentes, dans lequel ledit raccord (45"", 45""') est au moins partiellement encastré dans lesdits secteurs (44‴ʺ, 44""").

11. Dispositif selon l'une quelconque des revendications précédentes, dans lequel lesdits un ou plusieurs raccords (45) sont en forme de disques, joints dans des sièges respectifs (46) auxdits secteurs (44) le long de bords opposés respectifs.

12. Dispositif selon l'une quelconque des revendications 1 à 10, dans lequel lesdits un ou plusieurs raccords (45') ont la forme d'inserts munis de crochets d'extrémité (45a') destinés à être assemblés ou contraints dans des sièges façonnés (46') respectifs formés sur les bords longitudinaux desdits secteurs (44').

13. Dispositif selon l'une des revendications 1 à 10, dans lequel chaque raccord (45") forme une tige longitudinale (45b") à partir de laquelle une pluralité de crochets façonnés (45a") se ramifient transversalement et à partir des côtés opposés, destinés à être joints par verrouillage dans des sièges façonnés (46") respectifs obtenus sur les bords longitudinaux desdits secteurs (44").

14. Dispositif selon l'une quelconque des revendications 1 à 10, dans lequel chaque raccord (45"') forme une seule tige, avec des bords droits, de préférence co-moulés avec lesdits secteurs (44"') adjacents.

15. Dispositif selon l'une quelconque des revendications 1 à 10, dans lequel au moins un dit raccord (45"", 45‴ʺ, 45""') est constitué d'un anneau, donc adapté pour entourer sensiblement circonférentiellement lesdits secteurs (44"", 44‴ʺ, 44""") adjacents.

16. Dispositif selon la revendication 15, dans lequel ledit raccord (45‴ʺ, 45""') comprend une partie courbée (45c) destinée à rester découverte lorsqu'elle est assemblée auxdits inserts (44""', 44"""), pour conférer une conformité contrôlée audit manchon (4"", 4""").

17. Dispositif selon la revendication 16, dans lequel lesdits secteurs (44‴ʺ, 44""") définissent au moins un siège (46‴ʺ, 46""") façonné entre eux, adapté pour loger ladite partie courbée (45c) et pour définir un espace libre à l'intérieur duquel ladite partie courbée (45c) est découverte et peut se déformer de manière contrôlée.

18. Dispositif selon l'une quelconque des revendications précédentes, dans lequel lesdits secteurs (44, 44', 44", 44‴, 44"", 44""', 44""") sont constitués d'acier ou de plastique.

19. Dispositif selon l'une quelconque des revendications précédentes, dans lequel lesdits raccords (45, 45', 45", 45‴, 45"", 45‴ʺ) sont constitués de silicone ou de TPU.

20. Dispositif selon l'une quelconque des revendications précédentes, dans lequel il comprend une pluralité desdits raccords (45, 45', 45", 45‴, 45"", 45""') assemblés auxdits secteurs (44, 44', 44", 44"', 44"", 44""', 44""") pour raccorder des paires desdits secteurs (44, 44') dans une direction circonférentielle sensiblement adjacente (44, 44', 44", 44‴, 44"", 44‴ʺ, 44""").
